# FASCICULE DE BREVET EUROPEEN

(11) **EP 3 649 378 B1**
(45) Date de publication et mention de la délivrance du brevet: **04.08.2021**
(21) Numéro de dépôt: 18737516.7
(22) Date de dépôt: 25.06.2018
(51) Int. Cl.: F16H 57/04, F02C 7/36

(54) **COURONNE DE REDUCTEUR EPICYCLOÏDAL OU PLANETAIRE POUR UNE TURBOMACHINE**
ZAHNKRANZ FÜR EIN EPIZYKLISCHES- ODER PLANETENUNTERSETZUNGSGETRIEBE EINER TURBOMASCHINE
RING GEAR FOR AN EPICYCLIC OR PLANETARY REDUCTION GEAR OF A TURBOMACHINE

(30) Priorité: 05.07.2017 FR 1756346
(43) Date de publication de la demande: 13.05.2020
(73) Titulaire: Safran Transmission Systems, 92700 Colombes (FR)
(72) Inventeur: DOMBEK, Alexis, Claude, Michel, 77550 Moissy-Cramayel (FR); DI GIOVANNI, Jean-Charles, Michel, Pierre, 77550 Moissy-Cramayel (FR); RAPPAPORT, Florian, 77550 Moissy-Cramayel (FR)
(74) Mandataire: Gevers & Orès
(86) Numéro de dépôt international: PCT/EP2018/066963
(87) Numéro de publication internationale: WO 2019/007742

(56) Documents cités:
- EP-A1- 2 559 913
- DE-A1- 4 304 657
- FR-A1- 3 041 730
- US-A1- 2012 238 401

## Description

### Domaine technique :

Le domaine de la présente invention est celui des turbomachines et plus particulièrement celui des systèmes de transmission différentielle dans ces turbomachines, notamment les réducteurs planétaire ou épicycloïdal.

### Etat de l'art :

L'état de l'art comprend notamment les documents WO-A1-2010/092263, FR-A1-2 987 416, FR-A1-3 041 730 et FR-A1-3 041 054. Le document EP2559913A décrit aussi une couronne de l'état de l'art.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs planétaire et (à train) épicycloïdal qui ont l'avantage d'offrir des taux de réduction importants de la vitesse de rotation dans des encombrements réduits.

Un tel réducteur comprend un pignon planétaire ou pignon central, une couronne extérieure et des pignons satellites qui sont en prise avec le pignon planétaire et avec la couronne, le support de l'un de ces trois composants devant être bloqué en rotation pour le fonctionnement du train d'engrenages.

Lorsque le porte-satellites est fixe en rotation, le pignon central et la couronne sont menant et mené, respectivement, ou inversement. Le réducteur est alors du type « planétaire ».

Dans le cas inverse, d'un réducteur à train épicycloïdal, la couronne extérieure est fixe en rotation et le pignon central et le porte-satellites sont menants et menés.

La problématique principale de ce type de réducteur est d'assurer un engrènement optimal de chaque satellite d'une part avec le pignon central mais aussi avec la couronne.

La couronne s'étend autour de l'axe du réducteur et comporte des premier et second éléments annulaires coaxiaux et comportant respectivement deux dentures annulaires internes orientées différemment et destinées à coopérer avec chaque satellite. Les dentures de la couronne sont du type en chevron, les dentures des éléments ayant des angles d'hélice sensiblement opposés.

Les éléments annulaires de la couronne comportent respectivement des première et seconde brides annulaires radialement externes de fixation des éléments entre eux ainsi qu'à un porte-couronne annulaire destiné à s'étendre autour d'au moins une partie de la couronne.

Le document DE-A1-43 04 657 enseigne de fixer par soudage des éléments annulaires d'une couronne de réducteur. L'invention concerne ici une autre technologie consistant à boulonner les brides entre elles, c'est-à-dire à les fixer entre elles par des moyens de fixation du type vis-écrou.

Dans la technique actuelle, que ce soit pour une architecture épicycloïdale ou planétaire, il est difficile d'assurer un centrage optimal des éléments, ainsi que du porte-couronne. Ce centrage ou alignement axial est important afin de minimiser le désalignement des dentures des éléments de couronne en fonctionnement. La géométrie des brides précitées influe directement sur le désalignement des dentures en fonctionnement. Les éléments ont tendance à se rapprocher ou à s'écarter suivant les modes vibratoire et les formes de dentures, dont les efforts sont transmis au porte-couronne par les brides de la couronne. De plus, un calage angulaire précis est nécessaire entre les deux éléments afin d'indexer angulairement les dentures des éléments.

On a déjà proposé des solutions de centrage pour une couronne de ce type. Toutefois, ces solutions ne sont pas entièrement satisfaisantes. La solution consistant par exemple à prévoir un rebord périphérique à la périphérie interne de la bride de l'un des éléments, qui est destiné à être engagé dans un évidement annulaire de forme complémentaire de la périphérie interne de la bride de l'autre des éléments, n'est pas satisfaisante. En effet, la présence du rebord et de l'évidement de centrage au voisinage des dentures des éléments est susceptible de gêner la transmission des efforts dans les éléments et d'entraîner des comportements mécaniques et vibratoires différents des éléments en fonctionnement, et de se traduire par des désalignements de leurs dentures. Deuxièmement, le centrage par l'intérieur des éléments empêche de rapprocher la position axiale des voiles de ces éléments du plan médian passant entre les dentures. Par ailleurs, l'huile utilisée pour la lubrification du réducteur en fonctionnement doit pouvoir être évacuée et, lorsque des passages radiaux d'huile sont prévus à travers la couronne, ils se traduisent en général par des encoches radiales dans le rebord de centrage, qui ne sont pas forcément régulièrement réparties autour de l'axe et qui peuvent augmenter localement sa souplesse au détriment de sa fonction de centrage.

L'invention a pour but de pallier au moins une partie des problèmes et inconvénients évoqués dans ce qui précède.

### Présentation de l'invention:

L'invention concerne à cet effet une couronne de réducteur épicycloïdal ou planétaire pour une turbomachine, en particulier d'aéronef, ladite couronne s'étendant autour d'un axe et comportant des premier et second éléments annulaires coaxiaux et comportant respectivement deux dentures annulaires internes orientées différemment, lesdits premier et second éléments annulaires comportant en outre respectivement des première et seconde brides annulaires radialement externes de fixation desdits premier et second éléments entre eux, ainsi que de préférence à un porte-couronne annulaire destiné à s'étendre autour d'au moins une partie de la couronne par l'intermédiaire de moyens de fixation du type vis-écrou, caractérisée en ce que l'une desdites première et seconde brides comporte à sa périphérie externe un rebord cylindrique de centrage configuré pour coopérer avec la périphérie externe de l'autre desdites première et seconde brides.

L'invention propose ainsi d'assurer le centrage des éléments de couronne par l'extérieur de leurs brides, et non pas par l'intérieur comme évoqué plus haut. Le rebord cylindrique peut en outre être configuré pour assurer un centrage du porte-couronne, en coopérant par exemple avec une périphérie externe d'une bride annulaire de fixation de ce porte-couronne.

La couronne selon l'invention peut comprendre une ou plusieurs des caractéristiques suivantes, prises isolément les unes des autres ou en combinaison les unes avec les autres :
- ledit rebord cylindrique s'étend en continu sur 360° ; ceci permet une meilleure répartition des contraintes après un assemblage fretté par exemple ;
- chacune desdites première et seconde brides comportent une partie périphérique externe s'étendant dans un plan sensiblement perpendiculaire audit axe, et une partie périphérique interne s'étendant dans un plan incliné par rapport audit axe ; ceci permet le centrage des éléments annulaires et indirectement, le faux-rond des dentures de chaque élément ; la précision de ce centrage a un impact significatif sur le désalignement ;
- ledit rebord périphérique est situé à la périphérie externe de ladite partie périphérique externe de l'une desdites première et seconde brides ; ceci permet de libérer de la place sur la périphérie interne pour créer des brides symétriques, et de les rapprocher axialement les unes des autres ;
- ledit rebord permet l'assemblage des éléments annulaires entre eux et l'assemblage de la couronne avec le porte-couronne ;
- lesdites parties périphériques externes desdites première et seconde brides sont en appui axial l'une contre l'autre et comprennent des orifices axiaux traversants de passage desdits moyens de fixation ; ceci permet de transmettre le couple entre chaque élément annulaire et le porte-couronne ;
- comprennent des surfaces radiales d'appui sur lesquelles sont formées des encoches radiales (ou créneaux) de passage d'huile ; ceci permet de créer un passage d'huile et d'alléger les pièces ;
- lesdites encoches radiales (ou créneaux) communiquent à leurs extrémités radialement externes avec des orifices radiaux traversants formés dans ledit rebord cylindrique ; ceci permet à l'huile de s'échapper par l'extérieur du centrage des éléments annulaires ;
- lesdites encoches radiales (ou créneaux) communiquent à leurs extrémités radialement internes avec une cavité annulaire interne à section sensiblement triangulaire et formée par lesdites parties périphériques internes desdites première et seconde brides ; un piquage d'usinage peut être utilisé dans le présent cas pour avoir un rayon plus grand, ce qui a pour effet de diminuer les contraintes dans cette zone qui est relativement chargée ; il permet aussi de réaliser le centrage et la face d'appui axial dans une opération différente avec des paramètres différents ;
- lesdites parties périphériques externes desdites première et seconde brides comprennent des trous axiaux traversants de montage d'au moins un pion de calage angulaire desdits premier et second éléments ; ceci permet l'orientation des deux éléments annulaires pour créer une orientation correcte des dentures. L'orientation influe directement sur la position de l'APEX des dentures.

La présente invention concerne également un réducteur épicycloïdal ou planétaire pour une turbomachine, en particulier d'aéronef, caractérisé en ce qu'il comprend une couronne telle que décrite ci-dessus.

### Brève description des dessins :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente schématiquement une coupe axiale d'une turbomachine utilisant l'invention.
La figure 2 représente une vue détaillée en coupe d'un réducteur à train épicycloïdal.
La figure 3 est une vue écorchée et en perspective du réducteur de la figure 2.
La figure 4 est une vue partielle en coupe axiale d'un réducteur équipé d'une couronne selon l'invention.
La figure 5 est une vue partielle en perspective de la couronne de la figure 4.
La figure 6 est une section partielle axiale de la couronne de la figure 4.

### Description d'un mode de réalisation de l'invention :

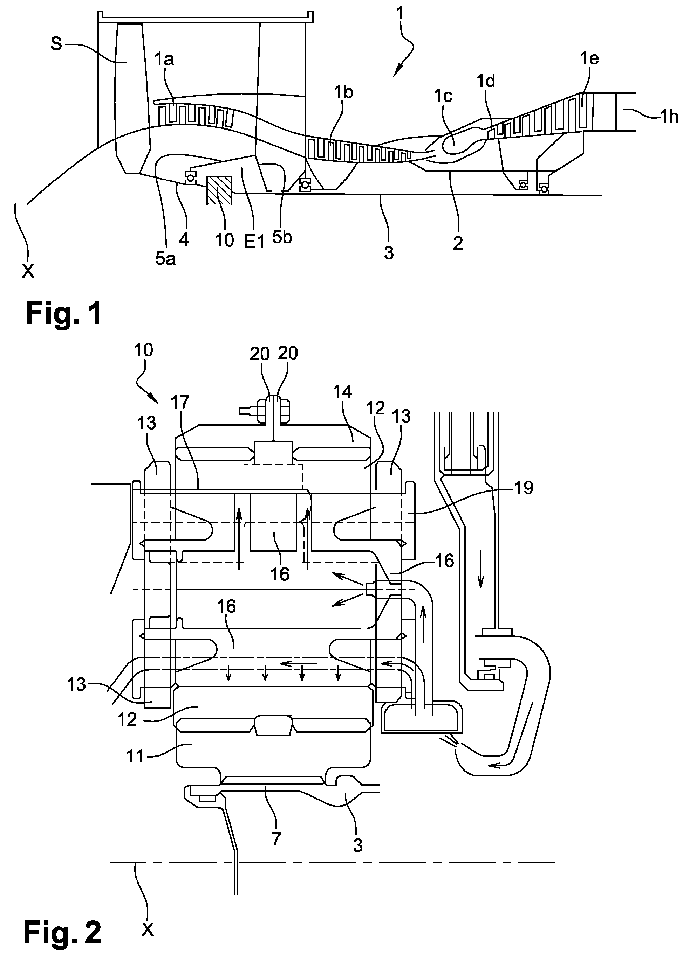

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression le et une tuyère d'échappement 1h. Le compresseur haute pression 1b et 1a turbine haute pression 1d sont reliés par un arbre haute pression 2 et forment avec lui un corps haute pression (HP). Le compresseur basse pression la et la turbine basse pression le sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

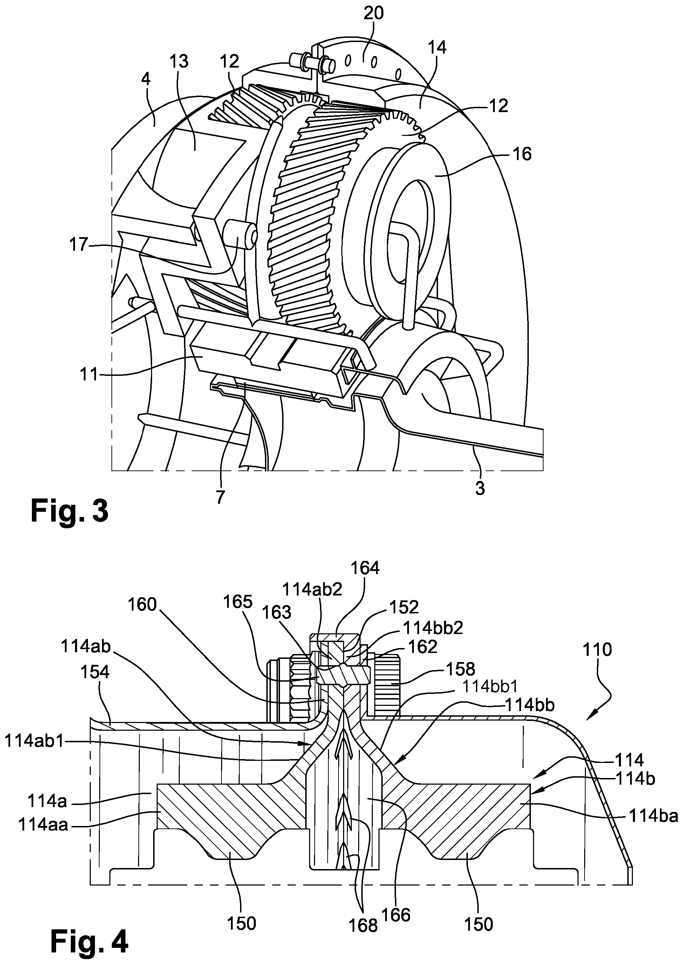

En référence aux figures 2 et 3, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie arbée maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2987416.

Le réducteur 10 embraye d'une part sur l'arbre BP3 par l'intermédiaire de cannelures 7 qui entraînent un pignon d'engrenage planétaire 11, et d'autre part sur l'arbre de soufflante 4 qui est attaché à un porte-satellites 13. Classiquement, le pignon planétaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et six. Les satellites 12 tournent aussi autour de l'axe X de la turbomachine sauf dans le cas d'un planétaire où ils tournent uniquement autour de leurs axes de révolution, en engrenant sur des dentures internes de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

La figure 2 montre, avec la figure 3, l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon lié à la structure fixe de la turbomachine, jusqu'aux pignons et aux paliers à lubrifier. Le dispositif de lubrification comporte classiquement trois parties : une première partie liée à la structure fixe et délivrant l'huile vers les parties tournantes du réducteur 10, un rouet tournant avec le porte-satellites 13 réceptionnant cette huile dans le cas d'un épicycloïdal et d'un distributeur assemblé au porte-satellite, qui sont fixes sur une architecture planétaire, et des circuits de distribution d'huile alimentés en huile par le rouet pour l'acheminer vers les endroits à lubrifier.

Les figures 4 à 6 illustrent un exemple de réalisation d'une couronne 114 selon l'invention.

La couronne 114 s'étend autour d'un axe qui est l'axe X du réducteur 110 et de la turbomachine, et comporte deux éléments annulaires coaxiaux, appelés premier élément annulaire 114a ou élément amont et second élément annulaire 114b ou élément aval.

Chaque élément 114a, 114b comprend un corps annulaire 114aa, 114ba de forme générale cylindrique et relié à une bride annulaire 114ab, 114bb s'étendant radialement vers l'extérieur.

Chaque corps 114aa, 114ba comprend une denture annulaire interne 150 à sa périphérie interne. Bien que cela ne soit pas visible sur les dessins, les dentures 150 des deux corps ou éléments, sont complémentaires des dentures des satellites, qui sont elles du type représenté à la figure 3. Les dentures 150 des éléments 114a, 114b sont en chevron.

Chaque denture 150 comprend un diamètre externe passant par sa périphérie externe, un diamètre interne passant par sa périphérie interne, ainsi qu'un diamètre primitif D qui est mesuré sensiblement à mi-hauteur ou mi-dimension radiale de la denture. Par ailleurs, on note P un plan médian de chaque denture, ce plan étant sensiblement perpendiculaire à l'axe précité et passant sensiblement au milieu de la denture dans la direction axiale.

Le corps 114aa, 114ba de chaque élément est relié par une extrémité longitudinale à la bride 114ab, 114bb correspondante. Le corps 114aa est relié à son extrémité aval, situé du côté de l'autre corps 114ba, à la bride 114ab, et le corps 114ba est relié à son extrémité amont, situé du côté de l'autre corps 114aa, à la bride 114bb.

Chaque bride 114ab, 114bb a une forme générale de dièdre et comprend deux parties périphériques, respectivement interne 114ab1, 114bb1 et externe 114ab2, 114bb2.

Les parties périphériques externes 114ab2, 114bb2 s'étendent sensiblement perpendiculairement à l'axe et ont donc une orientation sensiblement radiale. Elles sont destinées à être en appui axialement l'une sur l'autre et comprennent ainsi chacune une surface annulaire radiale d'appui 152.

Les parties 114ab2, 114bb2 servent à fixer les éléments 114a, 114b entre eux, ainsi qu'à un porte-couronne 154 dans l'exemple représenté.

Pour cela, les parties 114ab2, 114bb2 comprennent chacune une rangée annulaire d'orifices axiaux traversants 156 de passage de moyens de fixation 158 du type vis-écrou ou analogues. Les orifices 156 des parties 114ab2, 114bb2 sont alignés et reçoivent les moyens de fixation 158.

Le porte-couronne 154 comprend également une bride annulaire 160 de fixation aux brides 114ab, 114bb et en particulier aux parties 114ab2, 114bb2. La bride 160 est appliquée axialement sur l'une des parties 114ab2, 114bb2, à savoir ici la partie 114ab2 de l'élément amont 114a. La partie 114ab2 est ainsi intercalée axialement entre la bride 160 et la partie 114bb2. L'inverse est aussi possible. Par inverse, nous entendons que le porte-couronne soit du côté droit de la couronne, ce qui représente l'arrière du moteur.

La bride 160 comprend des orifices alignés avec les orifices 156 et qui reçoivent également les moyens de fixation 158, dont des têtes peuvent être appliquées axialement sur la face aval de la partie 114bb2 et des écrous peuvent être appliqués axialement sur la face amont de la bride 160 ou inversement. Dans l'exemple représenté, une bride 162 d'un récupérateur annulaire d'huile est en appui axial sur la partie 114bb2 et reçoit sur sa face aval les têtes des écrous.

Les parties 114ab2, 114bb2 comprennent en outre un premier jeu de trous axiaux 163 traversants et taraudés permettant le démontage du porte-couronne 154 avec la couronne 114. Un deuxième jeu de trous axiaux 163 traversants et taraudés permet de démonter l'élément 114a de l'élément 114b. Les parties 114ab2, 114bb2 comprennent aussi au moins un pion 165 de calage angulaire des éléments 114a, 114b. Chaque partie 114ab2, 114bb2 peut comprendre un ou plusieurs de ces trous 163, destiné(s) à être aligné(s) avec un ou plusieurs trou(s) 163 similaire(s) de l'autre partie, et à recevoir un pion de calage 165. Le pion 165 a ici une forme générale cylindrique et est orienté axialement. Il comporte un bourrelet annulaire externe, sensiblement en son milieu en direction axiale, et destiné à être situé sensiblement au niveau des surfaces 152 des brides.

La partie 114bb2 comprend à sa périphérie externe un rebord cylindrique de centrage 164. Ce rebord 164, qui est porté par l'élément 114b est configuré pour coopérer par glissement axial et appui radial avec la périphérie externe de l'autre élément 114a pour assurer le centrage, lors du montage et en fonctionnement, de cet autre élément 114a. En variante, l'élément 114a pourrait comprendre un tel rebord destiné à coopérer avec l'élément 114b en vue de son centrage.

Le rebord 164 est destiné à coopérer avec la périphérie externe de la bride 114ab de l'élément 114a, et en particulier avec le bord annulaire libre radialement externe de sa partie 114ab2. Au montage, le rebord 164 s'étend ainsi autour de la partie 114ab2.

Dans l'exemple représenté, le rebord 164 assure également le centrage du porte-couronne 154. Le rebord 164 peut coopérer comme indiqué dans ce qui précède avec la périphérie externe de la bride 160.

Le rebord 164 s'étend ici en continu sur 360°. Il n'est ainsi pas fendu ni sectorisé. La surface de référence pour le centrage est ainsi ininterrompue.

Les parties périphériques internes 114ab1, 114bb1 sont inclinées par rapport à l'axe X de la couronne 114. La partie 114ab1 s'étend radialement de l'amont vers l'aval en direction de l'extérieur, et la partie 114bb1 s'étend de l'amont vers l'aval en direction de l'intérieur. Dans l'exemple représenté, les parties 114ab1, 114bb1 sont inclinées de 0° à 90° par rapport à l'axe de rotation de la couronne X et plus préférentiellement entre 30 et 60°, et délimitent une cavité annulaire 166 à section de forme générale triangulaire, dont la pointe est orientée radialement vers l'extérieur. Leurs positions axiales sont telles que la fibre moyenne passe par l'intersection du plan médian de la denture ainsi que son diamètre primitif.

Les parties 114ab1, 114bb1 permettent de relier les parties 114ab2, 114bb2 aux corps des éléments 114aa, 114bb. Du fait de l'orientation des parties 114ab1, 114bb1 et de leur liaison aux extrémités longitudinales, respectivement aval et amont, des corps 114a, 114b ces corps sont écartés axialement l'un de l'autre d'une distance prédéterminée.

De l'huile de lubrification est destinée à s'écouler en fonctionnement à travers cet espace inter-corps et à pénétrer dans la cavité 166. Des passages sensiblement radiaux sont prévues entre les brides 114ab, 114bb afin d'autoriser l'évacuation de l'huile radialement vers l'extérieur de la couronne.

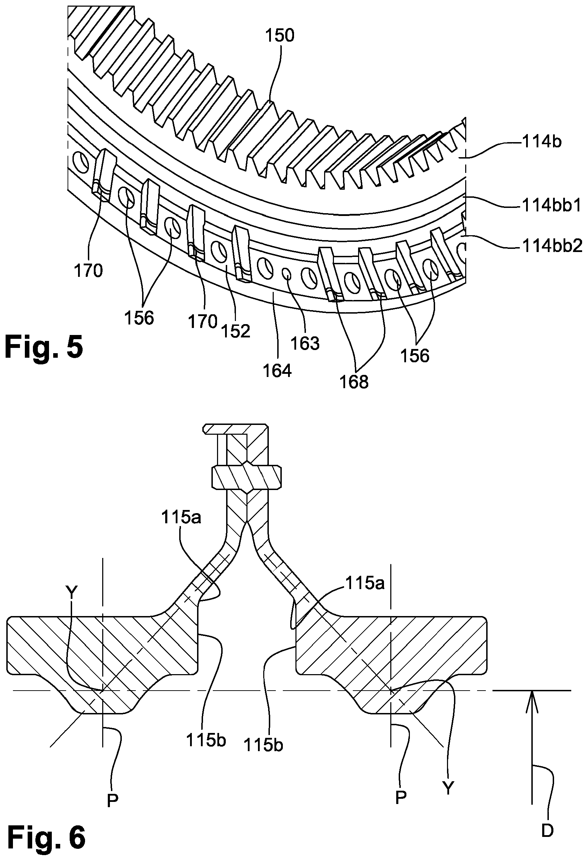

Les passages d'huile sont ici formés d'une part par des encoches 168 ou créneaux sensiblement radiales formées dans les surfaces 152 des brides. Chaque bride comprend une rangée annulaire d'encoches 168 alignées axialement avec des encoches 168 de l'autre des brides. Les encoches sont réalisées à distance des orifices 156 de passage des moyens de fixation 158, du trou du pion 165 ainsi que des trous 163. Chaque encoche a par exemple en section une forme semi-circulaire (demi-oblongue) ou rectangulaire comme dans l'exemple représenté (figure 5).

Les encoches sont en communication fluidique, à leurs extrémités radialement internes, avec la cavité 166, et à leurs extrémités axialement externes avec des orifices de forme oblongue 170 traversants de sortie d'huile formés dans le rebord de centrage 164. Autrement dit, les passages d'huile débouchent à leurs extrémités radialement externes sur la surface cylindrique externe du rebord 164, pour y former des orifices 170 de sortie d'huile.

La figure 6 montre une section axiale partielle du réducteur 110 dans lequel Y désigne l'intersection entre le plan P et le diamètre primitif D pour chaque denture 150. Comme on le voit sur le dessin, la partie périphérique interne 114ab1, 114bb1 de chaque bride s'étend dans un plan passant sensiblement par le point d'intersection Y. Cette position ainsi que l'inclinaison précitée sont deux paramètres importants dans cet exemple de réalisation.

Chaque partie périphérique interne 114ab1, 114bb1 a une surface périphérique interne 115a qui s'étend radialement vers l'extérieur dans le prolongement d'une surface radiale d'extrémité 115b du corps correspondant. La distance axiale entre les surfaces 115b correspond à la distance inter-éléments et à la dimension axiale maximale de la cavité 166.

Les parties périphériques internes 114ab1, 114bb1 ont une épaisseur sensiblement constante.

A l'exception du rebord 164, les éléments de couronne 114a, 114b sont symétriques par rapport à un plan médian, perpendiculaire à l'axe et passant sensiblement entre les éléments.

La couronne 114 selon l'invention est plus facile à réaliser, à monter ainsi qu'à contrôler que celles des technologies antérieures.

L'invention est applicable à une architecture épicycloïdale ou planétaire. Dans la première, la couronne est fixe et dans la deuxième, la couronne tourne autour de l'axe moteur. La couronne épicycloïdale ou planétaire sont tenues par le porte-couronne. Cependant, le porte-couronne peut avoir une forme, un mouvement et une fonction différente selon le type d'architecture. Dans le cas d'une architecture épicycloïdale, la partie arbre de soufflante se trouve sur le porte-satellite et dans le cas d'une architecture planétaire, celle-ci se trouve sur le porte-couronne.

## Revendications

1. Couronne (114) de réducteur (110) épicycloïdal ou planétaire pour une turbomachine, en particulier d'aéronef, ladite couronne s'étendant autour d'un axe et comportant des premier et second éléments annulaires (114a, 114b) coaxiaux et comportant respectivement deux dentures annulaires internes (150) orientées différemment, lesdits premier et second éléments annulaires comportant en outre respectivement des première et seconde brides annulaires radialement externes (114ab, 114bb) de fixation desdits premier et second éléments entre eux par l'intermédiaire de moyens de fixation (158) du type vis-écrou, **caractérisée en ce que** l'une desdites première et seconde brides comporte à sa périphérie externe un rebord cylindrique de centrage (164) configuré pour coopérer avec la périphérie externe de l'autre desdites première et seconde brides.

2. Couronne (114) selon la revendication précédente, dans laquelle ledit rebord cylindrique (164) s'étend en continu sur 360°.

3. Couronne (114) selon l'une des revendications précédentes, dans laquelle chacune desdites première et seconde brides (114ab, 114bb) comporte une partie périphérique externe (114ab2, 114bb2) s'étendant dans un plan sensiblement perpendiculaire audit axe, et une partie périphérique interne (114ab1, 114bb1) s'étendant dans un plan incliné par rapport audit axe.

4. Couronne (114) selon la revendication précédente, dans laquelle ledit rebord cylindrique (164) est situé à la périphérie externe de ladite partie périphérique externe (114ab2, 114bb2) de l'une desdites première et seconde brides (114ab, 114bb).

5. Couronne (114) selon la revendication précédente, dans laquelle lesdites parties périphériques externes (114ab2, 114bb2) desdites première et seconde brides (114ab, 114bb) sont en appui axial l'une contre l'autre et comprennent des orifices axiaux (156) traversants de passage desdits moyens de fixation (158).

6. Couronne (114) selon la revendication précédente, dans laquelle lesdites parties périphériques externes (114ab2, 114bb2) desdites première et seconde brides (114ab, 114bb) comprennent des surfaces radiales d'appui (152) sur lesquelles sont formées des encoches radiales (168) de passage d'huile.

7. Couronne (114) selon la revendication précédente, dans laquelle lesdites encoches radiales (168) communiquent à leurs extrémités radialement externes avec des orifices radiaux (170) traversants formés dans ledit rebord cylindrique (164).

8. Couronne (114) selon la revendication 6 ou 7, dans laquelle lesdites encoches radiales (168) ou créneaux communiquent à leurs extrémités radialement internes avec une cavité annulaire interne (166) à section sensiblement triangulaire et formée par lesdites parties périphériques internes (114ab1, 114bb1) desdits première et seconde brides (114ab, 114bb).

9. Couronne (114) selon l'une des revendications 5 à 8, dans laquelle lesdites parties périphériques externes (114ab2, 114bb2) desdites première et seconde brides (114ab, 114bb) comprennent des trous axiaux (163) traversants de montage d'au moins un pion (165) de calage angulaire desdites premier et second éléments (114a, 114b).

10. Réducteur (110) épicycloïdal ou planétaire pour une turbomachine, en particulier d'aéronef, **caractérisé en ce qu'**il comprend une couronne (114) selon l'une des revendications précédentes.

## Patentansprüche

1. Zahnkranz (114) eines epizyklischen oder Planetenuntersetzungsgetriebes (110) für eine Turbomaschine, insbesondere ein Flugzeug, wobei sich der Zahnkranz um eine Achse erstreckt und ein erstes und ein zweites koaxiales ringförmiges Element (114a, 114b) aufweist und jeweils zwei unterschiedlich ausgerichtete innere ringförmige Zähne (150) aufweist, wobei das erste und das zweite ringförmige Element weiter jeweils einen ersten und einen zweiten radial äußeren ringförmigen Flansch (114ab, 114bb) zum Befestigen des ersten und des zweiten Elements aneinander mittels Befestigungsmitteln (158) des Schrauben-Muttern-Typs aufweisen, **dadurch gekennzeichnet, dass** der eine des ersten und zweiten Flansches an seinem Außenumfang einen zylindrischen Zentrierrand (164) aufweist, der so konfiguriert ist, dass er mit dem Außenumfang des anderen des ersten und zweiten Flansches zusammenwirkt.

2. Zahnkranz (114) nach dem vorstehenden Anspruch, wobei sich der zylindrische Rand (164) kontinuierlich über 360° erstreckt.

3. Zahnkranz (114) nach einem der vorstehenden Ansprüche, wobei jeder des ersten und zweiten Flansches (114ab, 114bb) einen äußeren Umfangsabschnitt (114ab2, 114bb2), der sich in einer Ebene im Wesentlichen senkrecht zur Achse erstreckt, und einen inneren Umfangsteil (114ab1, 114bb1) aufweist, der sich in einer Ebene erstreckt, die in Bezug auf die Achse geneigt ist.

4. Zahnkranz (114) nach dem vorstehenden Anspruch, wobei der zylindrische Rand (164) am äußeren Umfang des äußeren Umfangsteils (114ab2, 114bb2) des einen des ersten und zweiten Flansches (114ab, 114bb) angeordnet ist.

5. Zahnkranz (114) nach dem vorstehenden Anspruch, wobei die äußeren Umfangsteile (114ab2, 114bb2) des ersten und zweiten Flansches (114ab, 114bb) axial gegeneinander anliegen und axiale Öffnungen (156) aufweisen, die von den Befestigungsmitteln (158) durchlaufen werden.

6. Zahnkranz (114) nach dem vorstehenden Anspruch, wobei die äußeren Umfangsteile (114ab2, 114bb2) des ersten und zweiten Flansches (114ab, 114bb) radiale Auflageflächen (152) umfassen, auf denen radiale Öldurchgangsnuten (168) ausgebildet sind.

7. Zahnkranz (114) nach dem vorstehenden Anspruch, wobei die radialen Nuten (168) an ihren radial äußeren Enden mit radialen Öffnungen (170) in Verbindung stehen, die durch sie hindurch in dem zylindrischen Rand (164) ausgebildet sind.

8. Zahnkranz (114) nach Anspruch 6 oder 7, wobei die radialen Nuten (168) oder Zinnen an ihren radial inneren Enden mit einem inneren ringförmigen Hohlraum (166) in Verbindung stehen, der im Querschnitt im Wesentlichen dreieckig ist und durch die inneren Umfangsteile (114ab1, 114bb1) des ersten und zweiten Flansches (114ab, 114bb) gebildet wird.

9. Zahnkranz (114) nach einem der Ansprüche 5 bis 8, wobei die äußeren Umfangsteile (114ab2, 114bb2) des ersten und zweiten Flansches (114ab, 114bb) axiale Löcher (163) umfassen, die von mindestens einem winkelförmigen Keilstift (165) des ersten und zweiten Elements (114a, 114b) zur Montage durchquert werden.

10. Epizyklisches oder Planetenuntersetzungsgetriebe (110) für eine Turbomaschine, insbesondere für ein Flugzeug, **dadurch gekennzeichnet, dass** es einen Zahnkranz (114) nach einem der vorstehenden Ansprüche umfasst.

## Claims

1. Ring gear (114) for an epicyclic or planetary reduction gear (110) for a turbine engine, in particular of an aircraft, said ring gear extending around an axis and comprising first and second coaxial annular elements (114a, 114b) and comprising respectively two inner annular teeth sets (150) of different orientations, said first and second annular elements further comprising respectively first and second radially outer annular flanges (114ab, 114bb) for attaching said first and second elements to one another by a fastening means (158) of the screw-nut type, **characterised in that** one of said first and second flanges comprises at its outer periphery a cylindrical centring rim (164) configured to cooperate with the outer periphery of the other of said first and second flanges.

2. Ring gear (114) according to the preceding claim, wherein said cylindrical rim (164) extends continuously over 360°.

3. Ring gear (114) according to one of the preceding claims, wherein each one of said first and second flanges (114ab, 114bb) comprises an outer peripheral portion (114ab2, 114bb2) extending in a plane that is substantially perpendicular to said axis, and an inner peripheral portion (114ab1, 114bb1) extending in a plane angled with respect to said axis.

4. Ring gear (114) according to the preceding claim, wherein said cylindrical rim (164) is located at the outer periphery of said outer peripheral portion (114ab2, 114bb2) of one of said first and second flanges (114ab, 114bb).

5. Ring gear (114) according to the preceding claim, wherein said outer peripheral portions (114ab2, 114bb2) of said first and second flanges (114ab, 114bb) are axially bearing against one another and comprise axial through-orifices (156) for passage of said fastening means (158).

6. Ring gear (114) according to the preceding claim, wherein said outer peripheral portions (114ab2, 114bb2) of said first and second flanges (114ab, 114bb) comprise radial bearing surfaces (152) in which are formed radial notches (168) for the passage of oil.

7. Ring gear (114) according to the preceding claim, wherein said radial notches (168) communicate at their radially external ends with radial through-orifices (170) formed in said cylindrical rim (164).

8. Ring gear (114) according to claim 6 or 7, wherein said radial notches (168) or slots communicate at their radially internal ends with an inner annular cavity (166) with a substantially triangular section and formed by said inner peripheral portions (114ab1, 114bb1) of said first and second flanges (114ab, 114bb).

9. Ring gear (114) according to any of claims 5 to 8, wherein said outer peripheral portions (114ab2, 114bb2) of said first and second flanges (114ab, 114bb) comprise axial through-holes (163) for mounting of at least one pin (165) for the angular fixing of said first and second elements (114a, 114b).

10. Epicyclic or planetary reduction gear (110) for a turbine engine, in particular of an aircraft, **characterised in that** it comprises a ring gear (114) according to any of the preceding claims.
